Europäisches Patentamt

European Patent Office

Office européen des brevets

(19)

(11) Numéro de publication: **0 353 109 B1**

(12) **FASCICULE DE BREVET EUROPEEN**

(45) Date de publication de fascicule du brevet: **20.10.93** (51) Int. Cl.5: **H04L 27/14**

(21) Numéro de dépôt: **89401611.2**

(22) Date de dépôt: **09.06.89**

(54) **Procédé de démodulation et démodulateur pour signaux numériques modulés, de façon continue, en phase et/ou en fréquence à l'aide d'une porteuse d'amplitude d'enveloppe constante.**

(30) Priorité: **24.06.88 FR 8808525**

(43) Date de publication de la demande:
**31.01.90 Bulletin 90/05**

(45) Mention de la délivrance du brevet:
**20.10.93 Bulletin 93/42**

(84) Etats contractants désignés:
**BE CH DE ES GB GR IT LI**

(56) Documents cités:
**EP-A- 0 094 040**

**IEEE TRANSACTIONS ON COMMUNICA-TIONS, vol. COM-33, no. 12, décembre 1985, pages 1285-1290, IEEE, New York, US; S.J. SIMMONS et al.: "Low-complexity carrier phase tracking decoders for continuous phase modulations"**

**IEEE GLOBAL TELECOMMUNICATIONS CONFERENCE, Houston, 1-4 décembre 1986, Communications Broadening Technology Horizons, Conference Record, vol. 2, pages 1078-1082, IEEE, New York, US; G. TROULLI-NOS: "Energy-based clock synchronization of polyphase digital modem receivers"**

(73) Titulaire: **THOMSON-CSF**
**51, Esplanade du Général de Gaulle**
**F-92800 Puteaux(FR)**

(72) Inventeur: **Tanguy, Yannick**
**Thomson-CSF**
**SCPI**
**CEDEX 67**
**F-92045 Paris La Défense(FR)**
Inventeur: **Robineau, José**
**Thomson-CSF**
**SCPI**
**CEDEX 67**
**F-92045 Paris La Défense(FR)**

(74) Mandataire: **Lincot, Georges et al**
**THOMSON-CSF,**
**SCPI,**
**B.P. 329,**
**50, rue Jean-Pierre Timbaud**
**F-92402 Courbevoie Cédex (FR)**

EP 0 353 109 B1

## Description

La présente invention concerne un procédé de démodulation et un démodulateur de signaux numériques d'amplitude d'enveloppe constante modulés en phase et/ou en fréquence de façon continue.

Elle concerne notamment les procédés de démodulation de signaux radioélectriques porteurs d'informations numériques, et leurs utilisations dans les systèmes de transmission de l'information par paquets ou en évasion de fréquence.

Dans ces procédés, les données à transmettre sont converties sous la forme de suites de symboles de durée constante formant l'intervalle Baud de la transmission pour moduler en fréquence ou en phase de façon continue une onde porteuse d'amplitude d'enveloppe constante. Leur intérêt réside surtout dans le fait qu'ils conduisent à des occupations en fréquence plus faibles que celles des systèmes de transmission connus sous les abréviations FSK ou PSK des désignations anglo saxonnes "Frequency Shift Keying" et "Phase Shift Keying" qui utilisent des symboles de forme rectangulaire.

Un exemple de système mettant en oeuvre un procédé de modulation à porteuse modulée en phase de façon continue et d'amplitude d'enveloppe constante est connu de la demande de brevet français n° 82 08043 correspondant à la demande de brevet européen EP-A-0 094 040.

Selon le système de modulation décrit, le modulateur d'émission comporte, un codeur qui fait correspondre aux données ou symboles à transmettre des valeurs discrètes de sauts de phase et un synthétiseur de symboles qui élabore en fonction des informations fournies par le codeur une forme de variation de phase continue à pente minimale, exprimée en fonction du temps par une loi polynomiale. Le démodulateur de réception utilise une démodulation synchrone et procède par corrélation pour récupérer les instants caractéristiques de la modulation et de la dérive en fréquence entre les porteuses d'émission et de réception.

Ce système présente l'avantage d'occuper une largeur de bande de fréquence faible eu égard au débit des informations qu'il transmet et de permettre par exemple des transmissions de données à 16 K bits/s dans des canaux larges de 25 KHz avec une atténuation à l'extérieur du canal de 50 dB.

Cependant, le démodulateur s'avère compliqué à réaliser lorsque les systèmes de transmission de données sont à transmettre des données par paquets ou en évasion de fréquence du fait notamment de la complexité du dispositif d'estimation de l'horloge symbole qui est employé. Comme celui-ci possède une fonction spécifique pour estimer la composante continue et une fonction spécifique pour estimer l'horloge symbole conditionnée par l'estimation de la composante continue, les effets dus au bruit naturel de la transmission et à la dérive en fréquence de l'oscillateur pilote de réception relativement à celle de l'oscillateur d'émission ne sont pas dissociés. Il en résulte que les performances du circuit de synchronisation vont en se dégradant à mesure que la transmission est entachée de bruit.

Le but de l'invention est de palier les inconvénients précités.

A cet effet, l'invention a pour objet un procédé de démodulation de signaux numérique d'amplitude d'enveloppe constante et modulés en phase et/ou en fréquence de façon continue, les signaux numériques étant composés par des suites de symboles de même durée T et juxtaposés les uns aux autres dans le temps, les symboles étant transmis au moyen de sauts de phase et/ou de fréquence, caractérisé en ce qu'il consiste :

- à détecter la phase du signal modulé sous la forme d'un signal d'amplitude variable fonction des variations de phase du signal modulant ;
- à échantillonner, suivant une période d'échantillonnage égale à $T/N$, la phase du signal modulé détecté, à l'intérieur de chaque durée symbole T au moyen d'un peigne d'impulsions d'échantillonnage obtenu à partir de N impulsions d'horloges régulièrement espacées d'un intervalle de temps égal à $T/N$ ;
- à calculer l'angle de phase différentielle $d\phi$ séparant chaque échantillon de phase d'un symbole courant détecté, de l'échantillon de même rang situé dans le symbole détecté au temps symbole précédent ;
- à coder chaque angle de phase différentielle $d\phi$ en lui attribuant un coût de codage dépendant de son amplitude ;
- à calculer les sommes des coûts de codage pour les échantillons de même rang appartenant à un nombre déterminé L de symboles consécutifs ;
- à identifier, parmi les N sommes obtenues celle qui donne le résultat le plus grand en mémorisant le rang occupé dans chaque symbole par les échantillons correspondants ;
- à prendre comme horloge de synchronisation symboles, pour définir les instants de synchronisation du démodulateur, l'horloge qui dans le peigne d'impulsions possède le même rang que le rang de l'échantillon mémorisé ;
- et à décoder l'angle de phase différentielle qui possède le même rang que l'échantillon mémorisé..

Elle a également pour objet, un démodulateur pour la mise en oeuvre du procédé précité.

L'invention a pour avantage qu'elle permet une acquisition rapide de l'horloge symbole compatible avec la longueur des paliers caractéristiques des transmissions en évasion de fréquence.

Ce résultat est obtenu grâce à la méthode relativement simple utilisée pour récupérer l'horloge symbole.

Cette simplicité résulte du fait que l'estimation de l'horloge symbole est effectuée selon un seul et même concept quelle que soit la cause de la fluctuation du rythme, qui peut être due soit à un retard constant entre l'émission et la réception, soit à une dérive en fréquence des fréquences de références des postes, soit à une dérive en fréquence due à l'effet Doppler, soit encore au bruit gaussien entachant normalement chaque transmission.

D'autre part, les performances par rapport aux systèmes antérieures doivent normalement être améliorées du fait qu'un véritable filtrage en phase et non en fréquence est opéré par le système proposé et qu'une corrélation plus fine est obtenue pour la recherche de la synchronisation.

D'autres caractéristiques et avantages de l'invention apparaîtront ci-après à l'aide de la description faite en regard des dessins annexés qui représentent :

La figure 1 une courbe pour rappeler le principe de la modulation de phase continue ;

La figure 2 le principe de l'échantillonnage mis en oeuvre par l'invention pour l'obtention d'échantillons de phase différentielle ;

La figure 3 une représentation connue d'un diagramme de l'oeil correspondant à une modulation à phase continue à 5 états ;

Les figures 4 à 6 une illustration des fonctions coûts utilisées comme critère de synchronisation ;

La figure 7 un mode de réalisation d'un démodulateur selon l'invention ;

La figure 8 un mode de réalisation du bloc de calcul de phase différentielle de la figure 7 ;

La figure 9 un mode de réalisation du bloc de mémorisation de la phase différentielle de la figure 7 ;

La figure 10 un mode de réalisation du bloc de calcul de l'horloge de synchronisation de la figure 7 ;

La figure 11 un graphe en trois dimensions de répartition de la fonction coût tenant compte de la dérive en fréquence de la porteuse ;

La figure 12 une vue de dessus du graphe de la figure 11 ;

La figure 13 un mode de réalisation du démodulateur de l'invention muni d'un dispositif de correction de dérive.

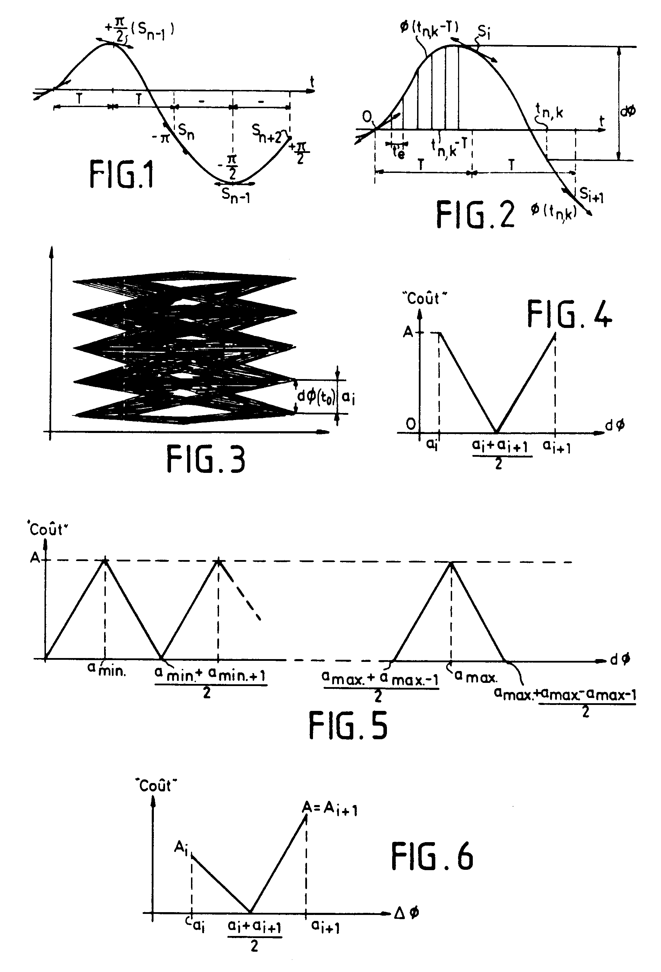

La courbe de la figure 1 retrace la loi de variation de phase $\phi_{(t)}$ d'un signal à enveloppe constante obtenu suivant le principe connu de la modulation de phase à phase continue. Sur cette courbe les points marqués 0, $+\P/2$, $-\P$, $-\P/2$ etc... représentent des états pris par la phase $\phi_{(t)}$ du signal pour transmettre les différents symboles $S_n$ qui caractérisent une transmission, chaque symbole étant représenté par un état de phase déterminé.

Comme décrit dans le brevet français précité, il est donné la même valeur de phase et la même pente à l'origine de chaque symbole $S_n$ et à l'extrémité du symbole $S_{n-1}$ qui le précède, d'autre part, la pente maximale de la courbe représentative de la phase $\phi_{(t)}$ est minimale entre les états de phase successifs de façon à réduire au maximum la largeur du spectre en fréquence occupée. En adaptant une solution polynomiale du troisième degré, la variation de phase entre chaque symbole $S_n$ et $S_{n-1}$ est très lente, et la largeur du spectre en fréquence occupée par la modulation est moindre que celle occupée par les modulations type FSK ou MSK citées précédemment.

Suivant l'invention la phase $\phi_{(t)}$ du signal est échantillonnée de la façon représentée à la figure 2 par un peigne d'échantillonnage dont chaque dent représente une horloge de synchronisation possible.

La phase différentielle $d\phi(t_{n,k})$ mesurée entre deux échantillons successifs est égale à

$$d\phi(t_{n,k}) = \phi(t_{n,k}) - \phi(t_{n,k}-T) \qquad (1)$$

avec $t_{n,k} = nT + kt_e$ avec $t_e = T/N$

où : N est le nombre total d'horloges de synchronisation

- $t_e$ est la période d'échantillonnage de la phase différentielle
- T est la période symbole

et k est un nombre entier compris entre 0 et N-1.

Pour réaliser de façon fiable de décodage des symboles, l'horloge symbole est estimée avec précision en tenant compte du fait que l'instant de décision choisi pour le décodage est régulièrement espacé dans le temps d'une période symbole et qu'il ne coïncide pas nécessairement avec l'instant de synchronisation.

L'instant de synchronisation $t_o$ correspond à l'emplacement du diagramme de l'oeil Figure 3 où l'information de synchronisation est la plus dense. Cet instant est défini par un nombre déterminé de valeurs d'échantillons de phase différentielle $a_i = d\phi(t_o)$ pour lesquels la différence minimale prise en valeur absolue entre deux échantillons est la plus grande possible pour que l'immunité au bruit soit la plus grande.

Cependant, comme les valeurs exactes de $a_i$ ne sont jamais atteintes à cause du bruit et des imperfections technologiques, l'instant de synchronisation ne peut être évalué qu'en estimant la distance qui sépare les valeurs des échantillons mesurés des valeurs exactes des échantillons $a_i$ qui correspondent réellement à l'instant de synchronisation. Cette distance mesure la probabilité de trouver effectivement l'instant de synchronisation et elle est définie, dans ce qui suit, à l'aide d'une fonction coût dont un exemple de représentation graphique est montré à la figure 4. Cette fonction possède des maximums d'amplitude A lorsque l'échantillon $a_i$ de phase différentielle $d\phi$ mesuré correspond exactement aux instants de synchronisation et des valeurs nulles pour les échantillons de phase différentielle $d\phi$ situés aux milieux des intervalles compris entre les instants exacts de synchronisation successifs. Sur les représentations des figures 4 et 5 les variations de la fonction coût entre chaque point de la courbe d'amplitude nulle et les deux points directement voisins d'amplitudes maximums A sont linéaires, les droites correspondantes ayant des pentes opposées. Cependant selon d'autres variantes de réalisations de l'invention, le mode de variation linéaire pourra être remplacé par des modes de variation polygoniaux.

L'amplitude maximum A du coût est fixée par la largeur d'une fenêtre statistique comptée en nombre de symboles et éventuellement des limitations imposées par le cahier des charges (longueur d'un palier EVF par exemple).

Pour les échantillons $a_{imin}$ et $a_{imax}$ correspondant aux symboles extrêmes de la fenêtre, la symétrie de la fonction coût est celle qui est représentée à la figure 5.

Une variante tenant compte d'une non équiprobabilité des échantillons $a_i$ est représenté à la figure 6. Selon cette variante, chaque fonction coût relative à un échantillon $a_i$ d'un symbole $S_i$ présente une amplitude maximum $A_i$ qui lui est propre. Cette amplitude $A_i$ est définie par la relation $A_i = A \times P_i/P$ où A désigne l'amplitude maximum possible et $P_i$ désigne la probabilité d'obtenir l'instant de synchronisation $t_o$ confondu avec l'instant d'échantillonnage de la phase différentielle $d\phi$.

L'estimation de l'horloge a lieu en choisissant celle qui est la plus proche de la position dans le temps de la suite des échantillons d'ordre $a_i$ de chaque symbole dont le total des coûts accumulés sur L symboles consécutifs et mesurés à l'aide de la fonction coût décrite précédemment est maximal. Cette estimation statistique est effectuée dans le cas d'un mode de transmission par paquets ou en évasion de fréquence, sur le nombre L des symboles d'un paquet ou d'un palier en évasion de fréquence. Pour chaque horloge symbole d'indice k d'un ensemble de N horloges correspond une estimation statistique décrite par une relation de la forme :

$$S_{(k)} = C(d\phi(t_{no,k})) + C(d\phi(t_{no+1,k})) + \ldots + C(d\phi(t_{no+L,k}))$$

Si $k_e$ désigne l'horloge de synchronisation estimée, celle-ci est déterminée par la somme $S_k$ qui présente le résultat le plus grand.

Suite à cette estimation deux actions sont menées :

La première action consiste à corriger l'horloge du démodulateur pour permettre le recalage de celle-ci sur l'instant d'horloge $k_e$ précédemment estimé.

La deuxième action consiste à décider du décodage.

L'action de correction de l'horloge de démodulation est réalisée via un séquencement interne du démodulateur et s'exécute dans le sens qui ramène à l'horloge symbole prise comme référence, à l'instant initial, cet instant pouvant être choisi comme le milieu de la plage de temps couverte dans un symbole par toutes les horloges du peigne. Comme l'horloge de décision du décodage n'est pas nécessairement confondue avec l'horloge de synchronisation mais peut présenter un écart constant avec l'horloge de synchronisation, l'instant de décision du décodage doit également être déterminé par une translation dans le même sens que celui effectué pour l'instant de synchronisation.

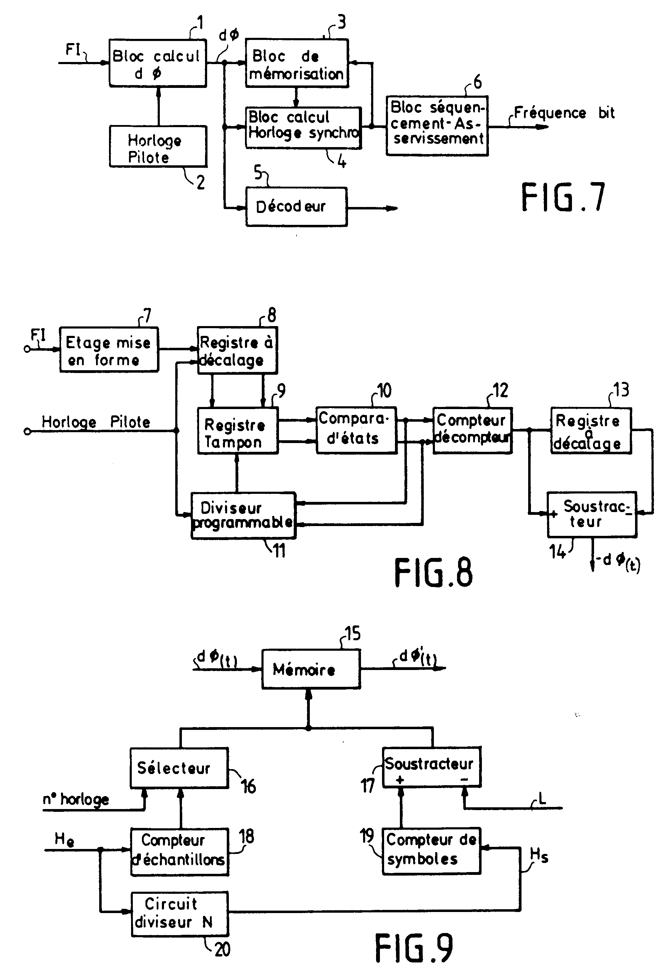

Un exemple de réalisation d'un démodulateur selon l'invention est représenté à la figure 7. Il comprend un bloc 1 de calcul de la phase différentielle $d\phi$, piloté par une horloge pilote 2, et couplé à un bloc de mémorisation 3, à un bloc de calcul de l'horloge de synchronisation 4 et à un décodeur 5. Le bloc de calcul de l'horloge de synchronisation 4 est couplé d'autre part, au bloc de mémorisation 3 et à un bloc de séquencement et d'asservissement 6.

Le bloc de calcul de la phase différentielle 1 est représenté en détail sur la figure 8. Il comprend un étage de mise en forme 7, relié à un registre à décalage 8. Le registre à décalage 8 est couplé à une boucle à verrouillage de phase composée par un registre tampon 9, un comparateur d'états 10 et un diviseur programmable 11. Le comparateur d'état 10 est relié à un registre à décalage 13 au travers d'un compteur-décompteur de phase 12. Le compteur-décompteur de phase 12 est relié à une première entrée d'opérande d'un circuit soustracteur 14. La deuxième entrée d'opérande du circuit soustracteur 14 est reliée à ce registre à décalage 13.

Le bloc de calcul de la phase différentielle 1 constitue l'entrée fonctionnelle du démodulateur. Son rôle est de mettre sous une forme binaire exploitable par le démodulateur, le signal radio FI en bande de base issu de systèmes de transposition de fréquence classiques non représentés, obtenu de façon connue en sortie des étages de fréquence intermédiaire d'un récepteur.

Cette fonction est assurée de façon connue par l'étage de mise en forme 7 au moyen par exemple d'un circuit comparateur de tension, non représenté, à même de travailler à des fréquences et des tensions compatibles avec le signal d'entrée. A cet égard deux types de mise en forme peuvent éventuellement être effectués. Une première mise en forme peut consister à comparer le signal d'entrée à la valeur moyenne de ce dernier et dans ce cas, le comparateur doit être pourvu d'un système à hystérésis pour éviter des instabilités dans le cas où le signal d'entrée est faible. Une deuxième mise en forme peut consister à comparer le signal d'entrée FI de manière différentielle. L'avantage de ce dernier type de comparaison est qu'il permet une transcription parfaite des points où le niveau du signal d'entrée s'annule. La deuxième fonction assurée par le bloc de calcul 1 est le calcul de la phase différentielle d$\phi$ proprement dit. La première opération qui est exécutée consiste à créer un signal numérique à partir de l'horloge pilote, capable d'être comparé en phase avec le signal d'entrée. Ceci est assuré de façon connue par une boucle à verrouillage de phase. Cette boucle se compose sur la figure 8 des éléments 8 à 11.

Le registre 8 contient les échantillons du signal d'entrée et son contenu est renouvelé avec une précision et périodicité égales à celles du diviseur programmable 11.

Le registre tampon 9 permet de stabiliser deux échantillons du signal pris successivement et ceci à la fréquence de l'horloge locale.

Le comparateur d'états 10 assure une comparaison entre les grandeurs des échantillons contenus dans le registre 9. Il fournit de la sorte sur sa sortie, deux informations qualifiant la croissance ou la décroissance en phase du signal d'entrée. Son évolution temporelle a une précision qui est fixée par le rapport de l'horloge pilote et du signal d'entrée. Le pas d'échantillonnage est par exemple de 10°, si le rapport est le $1/36^e$ de la période du signal d'entrée.

Les deux informations d'avance de phase (+10° dans l'exemple) et de retard de phase (-10° dans l'exemple) fournies par le comparateur d'états 10 sont appliquées à l'entrée du circuit 11.

Le compteur-décompteur 12 effectue la comptabilisation des avances et retards de phase fournis par le comparateur d'états 10. Une avance de phase augmente d'une unité le contenu du compteur 12 et un retard diminue son contenu d'une unité.

La sortie du compteur-décompteur 12 peut fournir dans ces conditions la phase absolue $\phi_{(t)}$ du signal d'entrée depuis un instant quelconque d'utilisation à la valeur zéro du contenu du compteur-décompteur 12.

Le registre à décalage 13 a une structure de registre pile, encore connue sous la désignation anglo-saxonne FIFO qui est l'abréviation de "First in first out", et forme avec le circuit soustracteur 14, l'élément de calcul de phase différentielle proprement dit. Le circuit soustracteur 14 reçoit en addition les échantillons de phase $\phi_{(t)}$ successifs provenant du compteur/décompteur 12 et reçoit en retranchement les échantillons de phase successifs $\phi_{(t-T)}$ issus du registre à décalage 13 dont le nombre fixe de décalages est égal au rapport de la fréquence d'échantillonnage du signal modulant ($H_e$) à la fréquence du signal modulant lui-même (H symbole). L'écart de phase d$\phi_{(t)}$ obtenu à la sortie du circuit soustracteur 14 vérifie la relation :

$$d\phi_{(t)} = \phi_{(t)} - \phi_{(t-T)}$$

où t désigne l'instant présent et T la période du signal modulant, cette période étant la même que la période symbole décrite précédemment.

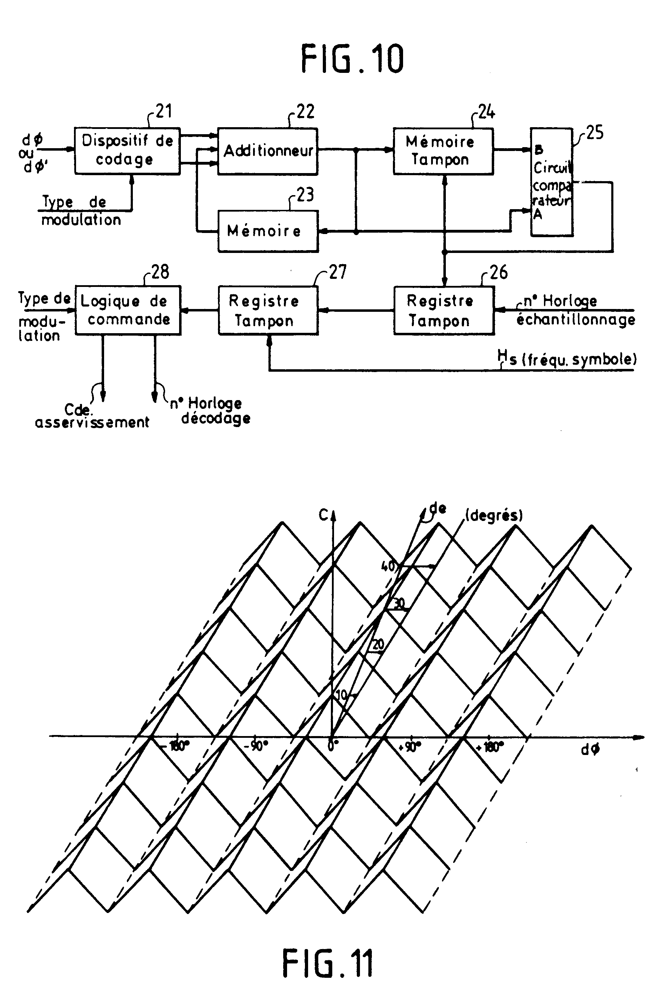

Les échantillons de phase différentielle d$\phi_{(t)}$ sont transmis à l'entrée du bloc de mémorisation 3. Ce bloc, qui est représenté à la figure 9 comprend une mémoire vive à accès aléatoire 15 adressée par un sélecteur d'adresse 16 et par la sortie d'un circuit soustracteur 17. La mémoire 15 permet l'enregistrement et la relecture des échantillons de la phase différentielle d$\phi_{(t)}$ obtenus du bloc de calcul 1. Le sélecteur 16 comporte deux entrées. Une première entrée reçoit le numéro de l'horloge de décodage, l'autre est reliée à la sortie d'un compteur d'échantillon 18. Le circuit soustracteur 17 comporte deux entrées d'opérandes. Une première entrée d'opérande marquée (+) est reliée à la sortie d'un compteur de symbole 19. La deuxième entrée d'opérande marquée (-) reçoit sous la forme d'un mot binaire le nombre de symboles L sur lequel porte les calculs statistiques décrits précédemment. Le compteur de symbole 19 progresse au rythme d'impulsions fournies par un circuit diviseur 20, ce circuit 20 effectuant une division par le nombre N d'échantillons contenus dans un symbole de la fréquence d'échantillonnage Fe.

Pour retrouver les informations, notamment le rythme et les caractères de la modulation, il est nécessaire que le signal modulant reçu et la phase différentielle d$\phi_{(t)}$ calculée, subissent un sur-échantillonnage à décalage constant. Cet échantillonnage est choisi N fois supérieur à la fréquence symbole et le décalage entre échantillons est de 360/N degrés de la phase du signal modulant.

Dans ce but, le bloc de calcul de l'horloge de synchronisation 4 opère par traitement glissant sur les symboles consécutifs correspondant à la longueur du traitement statistique.

Pour satisfaire à ces conditions, la mémoire 15 est organisée pour stocker N x L échantillons de la phase différentielle et son fonctionnement est similaire à celui d'un registre à décalage. Sa structure est de préférence celle d'une mémoire à accès aléatoire pour permettre un fonctionnement souple en évasion de fréquence ou en mode de transmission de l'information par paquets.

L'adressage de la mémoire 15 est réalisé à l'aide des circuits 16 à 20.

Le sélecteur 16 assure la commutation entre deux modes distincts de fonctionnement en écriture ou en lecture de la mémoire 15.

Le mode de fonctionnement en écriture permet l'enregistrement dans la mémoire 15 des échantillons de phase différentielle $d\phi_t$ provenant du bloc de calcul 1.

L'adressage est défini pour permettre à chaque dernier échantillon $d\phi_{(t)}$ qui arrive à un instant $t_o$, de prendre la place de celui qui a été enregistré au temps $t = t_o - LT$ c'est-à-dire L symboles plutôt. Le repérage de la case mémoire concerné est fourni par les contenus des compteurs 18, 19 et 20. Dans le mode de fonctionnement en lecture, l'échantillon de la phase différentielle $d\phi'_{(t)}$ occupant la place du prochain à venir est dirigé vers le bloc de calcul de l'horloge de synchronisation 6. Cependant, le mode de fonctionnement en lecture est aussi provoqué pour transmettre l'échantillon de phase différentielle $d\phi_{(t)}$ au décodeur 5 dont le numéro d'horloge a été reconnu ayant la plus forte probabilité d'être celui correspondant à l'horloge de synchronisation. Le fonctionnement combiné du sélecteur 16 et du soustracteur 17 permet de faire travailler la mémoire en mode d'adressage par paquets, le sélecteur 10 étant commandé pour sélectionner l'horloge de décodage, l'entrée notée (-) du sélecteur 11 recevant un nombre binaire compris entre zéro et L.

Le bloc de calcul de l'horloge de synchronisation représenté à la figure 10 se compose de 4 parties.

La première partie comprend un dispositif de codage 21 formée par une mémoire morte programmable ou tout dispositif équivalent permettant le codage des échantillons de phase différentielle. Le codage est effectué en appliquant la fonction coût décrite précédemment à chaque échantillon de phase différentielle $d\phi_{(t)}$. La mémoire du dispositif de décodage 21 est adressée d'une part, par l'échantillon de phase arrivant $d\phi_{(t)}$ et par l'échantillon déjà mémorisé dans la mémoire 15 au temps $t = t_o - LT$.

La deuxième partie comprend un circuit additionneur 22 et une mémoire vive 23.

La mémoire 23 a un rôle d'accumulateur pour le circuit additionneur 22. Elle comprend une pile de N registres accumulateurs organisée dans le mode FIFO. Le circuit additionneur 22 ajoute à chaque donnée lue sortant par le dernier registre de la pile les transformées ($C.d\phi_{(t)}$ et $Cd\phi'_{(t)}$) par les fonctions coût décrites précédemment, des échantillons de phase différentielle $d\phi_{(t)}$ et $d\phi'_{(t)}$. Chaque résultat de l'addition calculée par le circuit additionneur 22 est mémorisé dans le premier registre de la pile, les contenus de chaque registre accumulateur de la mémoire 23 étant poussés successivement dans les registres suivants de la pile à chaque nouveau résultat fourni par le circuit additionneur 22, additions et décalages ayant lieu à la fréquence d'échantillonnage N/T.

De la sorte, à la somme des L derniers coûts, obtenus pour chaque suite d'échantillons espacés de N, est retranchée le coût $C.d\phi'_{(t)}$ sortant de la mémoire 15 et ajouté le coût entrant $C.d\phi_{(t)}$ dans la mémoire 15.

La troisième partie du bloc de calcul de l'horloge de synchronisation comprend une mémoire tampon 24, un circuit comparateur de supériorité 25 et un registre tampon 26. Elle a pour fonction de repérer dans les N sommes des coûts, qui sont constamment mises à jour dans la mémoire 23 par le circuit additionneur 22, celle qui donne une amplitude maximale, ce repérage ayant lieu en temps réel avec le débit binaire de la modulation, c'est-à-dire à la fréquence symbole 1/T. Chaque somme de coût maximal est mémorisée dans la mémoire 24, où elle reste tant qu'une nouvelle somme n'est pas trouvée pour la remplacer. Cette mémorisation est commandée par le circuit comparateur de supériorité 25 qui compare à tout instant le contenu de la mémoire tampon 24 avec chacune des sommes des coûts calculés par le circuit additionneur 22. Le circuit comparateur de supériorité 25 fournit également un signal de commande au registre tampon 26 pour mémoriser chaque nouveau numéro d'échantillon qui donne lieu à un nouveau maximum de la fonction coût.

Tous les N échantillons, la mémoire 24 a en mémoire la somme des coûts la plus forte et le registre tampon 26 possède le numéro d'horloge associé à cette somme. Le numéro de l'horloge est alors transféré dans un registre tampon 27 relié au registre tampon 26 et le processus précédent se répète.

La quatrième partie du bloc de calcul de l'horloge de synchronisation comprend une logique de commande 28 qui agit en fonction du numéro d'horloge mémorisé dans le registre tampon 27.

Suivant le type de modulation utilisé, la logique de commande fournit au décodeur 5 le n° de l'horloge de décodage trouvé dans le registre tampon 27 et une information pour commander le bloc de séquencement et d'asservissement 6 du démodulateur.

Le décodage de la phase différentielle est effectué par le décodeur 5, celui-ci décode l'échantillon de phase différentielle dont le numéro d'horloge est celui retenu par la fonction coût.

Pour permettre au démodulateur de fonctionner avec plusieurs types de modulation différents une mémoire programmée spécifique de chaque modulation peut être incluse dans le décodeur 5 et à la suite de cette mémoire, plusieurs types de circuits de sortie pourront être envisagés, pour adapter le fonctionnement du démodulateur aux différents types de transmissions.

Le procédé de démodulation et le démodulateur qui viennent d'être décrits ont des performances acceptables si la dérive en fréquence de la porteuse reste faible. La dérive en fréquence sur la porteuse radio est liée à la différence de fréquence entre les horloges pilotes des postes émetteurs et récepteurs. Cette dérive peut être par exemple de ± 1kHz pour une fréquence porteuse de 100 MHz avec une fréquence d'horloge pilote de 5 MHz à ± $10^{-5}$. A cela doit être ajouté ou retranché la dérive propre à l'effet Doppler qui est estimé pour les véhicules terrestres à $\pm10^{-7}$ fois la fréquence de la porteuse radio ce qui correspond dans l'exemple précédent à une dérive de ±10 Hz. Pour les liaisons avion-sol ou entre avion la valeur de la dérive due à l'effet Doppler est plus importante et peut atteindre $\pm2\ 10^{-6}$ fois la fréquence de la porteuse radio, ce qui dans l'exemple précédent donne ± 200 Hz de dérive. Cet effet de dérive se traduit par un glissement positif ou négatif de la phase différentielle. Avec par exemple une fréquence symbole F symbole de 25 KHz et une dérive Δf estimée à ± 1KHz on obtient Δf/F symbole = ± 0,04 c'est-à-dire un glissement de ± 15° de la phase différentielle. De ce fait, la présence de dérives provoquent un décalage des caractères symboliques propres à la modulation de phase utilisée. Pour des dérives importantes, le procédé et le démodulateur décrits précédemment doivent être adaptés pour tenir compte de ces dérives et du fait que l'estimation de la dérive et de l'horloge d'échantillonnage doivent s'effectuer en des temps très courts inférieures à la durée des paliers des systèmes de transmission en évasion de fréquence contenant les données utiles. Ce problème peut être résolu en effectuant une estimation simultanée de l'horloge d'échantillonnage de réception et de la dérive de la porteuse. En fait, la dérive sur la porteuse peut être estimée au moyen du décentrage qui est observé sur la phase différentielle. De ce fait cette dérive peut être estimée en degré par période symbole.

Au lieu d'utiliser une fonction coût paramétrée par l'instant d'échantillonnage de réception, le procédé mis en oeuvre utilise une fonction coût paramétrée par une vecteur dont les deux composantes sont l'horloge d'échantillonnage et la dérive.

Il est possible de représenter cette fonction coût, le paramètre horloge d'échantillonnage étant fixé, puisque cette fonction est invariante par translation de ce paramètre. Cette fonction peut être représentée dans un espace à trois dimensions, un premier plan étant formé par l'axe des dérives sur la porteuse et l'axe de la phase différentielle, l'axe des ordonnées représentant le coût étant perpendiculaire à ce plan. La même fonction coût décrite précédemment au regard des figures 4 à 6 peut alors être utilisée. Cette fonction sert de référence aux calculs car elle correspond au cas où la dérive sur la porteuse est nulle. La fonction de référence peut être considérée comme la projection d'une fonction coût générale sur le plan d'équation : dérive = 0.

Les projetés de la fonction coût générale sur les plans d'équation dérive = $C^{te}$ sont obtenues par translation du paramètre phase différentielle de la quantité donnée par la dérive.

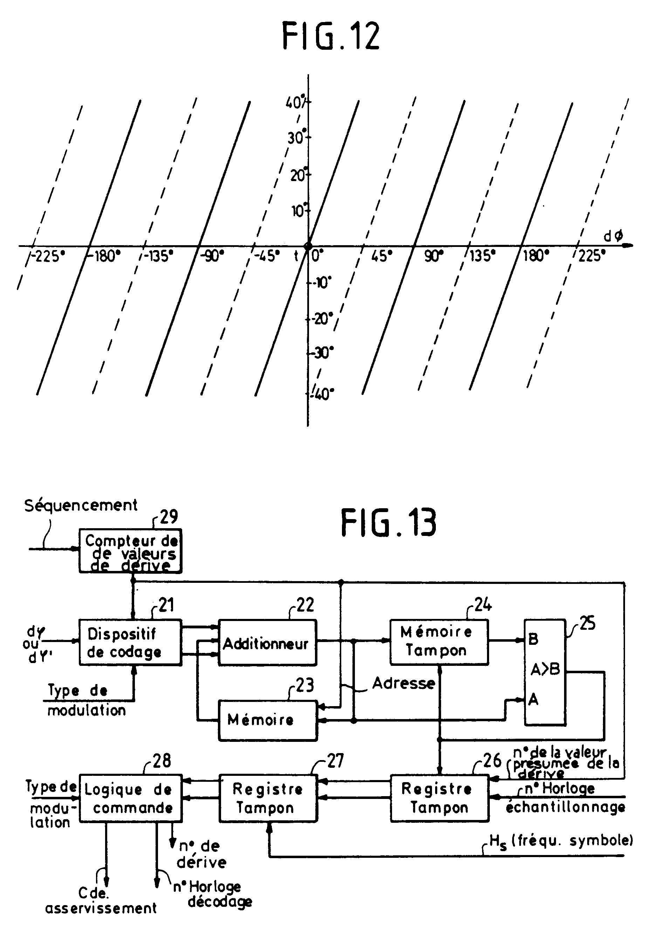

Une représentation des projections est montrée aux figures 11 et 12.

Le paramètre estimé est le paramètre qui maximise la statique ainsi obtenue.

Avec les notations précédentes et l'adjonction d'un paramètre dérive $d_e$, l'estimation statistique (2) devient :

$$S(k,d_e) = C(d\phi_{(tno,k)},d_e) + C(d\phi_{(tno+1,k)},d_e)$$
$$+ ... + C(d\phi_{(tno+L,k)},d_e) \qquad (3)$$

Pour compenser l'effet de cette dérive et en estimer sa valeur en degrés par symbole, le bloc de calcul de l'horloge de synchronisation est modifié de la manière représenté à la figure 13, où les éléments similaires à ceux de la figure 10 sont représentés avec les mêmes références, par l'adjonction d'un compteur de dérive 29, et l'introduction de tables de codage des coûts dans le dispositif de codage 21 adressés par le compteur 29 pour tenir compte du paramètre de dérive. Le bloc de calcul représenté à la figure 13 effectue pour chaque valeur discrète de la dérive en fréquence présumée, la somme des L derniers coûts indexés par le même numéro de l'horloge d'échantillonnage.

Ce calcul est effectué par l'additionneur 22 et la mémoire 23 de façon similaire à celui exécuté par le bloc de calcul de la figure 10 excepté cependant en ce qui concerne le nombre de sommes partielles à comparer qui est égal à N fois le nombre $n_d$ de valeurs discrète de dérive prises en compte. Pour cela la mémoire 23 doit contenir autant de piles de registres qu'il y a de nombre $n_d$ de valeurs discrètes de dérives. La mémoire tampon 24 mémorise comme précédemment la somme des coûts de valeur maximale, cette dernière étant indexée à la fois avec le numéro de l'horloge d'échantillonnage et la valeur présumé de la dérive.

Sur le schéma de la figure 13, la valeur présumée de la dérive est transmise par le compteur de dérive 29 à l'intérieur du registre tampon 26. Le registre tampon 26 possède de la sorte à la fin de période symbole de référence la valeur présumée de la dérive et du numéro d'horloge qui ont donné la somme des L derniers coûts la plus forte, c'est-à-dire une parmi les $Nn_d$ sommes. Ces valeurs sont transmises comme sur la figure 10 dans le registre tampon 27. Pour permettre le décodage des symboles le décodeur 5 de la figure 7 doit recevoir le où les éléments de phase différentielle affectés du bon numéro d'horloge de décalage fourni par la logique de commande 28 et la valeur de la dérive en fréquence également contenue dans le registre tampon 27 et fournie par la logique de commande 28. La valeur de la dérive en fréquence est appliquée à une entrée du décodeur 5 pour lui permettre d'effectuer une translation de la phase différentielle des symboles à décoder.

**Revendications**

1. Procédé de démodulation de signaux numériques d'amplitude d'enveloppe constante et modulés en phase et/ou en fréquence de façon continue, les signaux numériques étant composés par des suites de symboles de même durée T et juxtaposés les uns aux autres dans le temps, les symboles étant transmis au moyen de sauts de phase et/ou de fréquence, caractérisé en ce qu'il consiste :
   - à détecter (1) la phase du signal modulé sous la forme d'un signal d'amplitude variable fonction des variations de phase du signal modulant ;
   - à échantillonner (7), suivant une période d'échantillonnage égale à T/N, la phase du signal modulé détecté, à l'intérieur de chaque durée symbole T au moyen d'un peigne d'impulsions d'échantillonnage obtenu à partir de N impulsions d'horloges régulièrement espacées d'un intervalle de temps égal à T/N ;
   - à calculer (1 ;8-14) l'angle de phase différentielle $d\phi$ séparant chaque échantillon de phase d'un symbole courant détecté, de l'échantillon de même rang situé dans le symbole détecté au temps symbole précédent ;
   - à coder (21) chaque angle de phase différentielle $d\phi$ en lui attribuant un coût de codage dépendant de son amplitude ;
   - à calculer (22, 23) les sommes des coûts de codage pour les échantillons de même rang appartenant à un nombre déterminé L de symboles consécutifs ;
   - à identifier (24, 25), parmi les N sommes obtenues celle qui donne le résultat le plus grand en mémorisant le rang occupé dans chaque symbole par les échantillons correspondants ;
   - à prendre (26) comme horloge de synchronisation symboles, pour définir les instants de synchronisation du démodulateur, l'horloge qui dans le peigne d'impulsions possède le même rang que le rang de l'échantillon mémorisé ;
   - et à décoder (5) l'angle de phase différentielle qui possède le même rang que l'échantillon mémorisé.

2. Procédé selon la revendication 1, caractérisé en ce que le coût de codage à une valeur maximum lorsque l'angle de phase différentielle calculé correspond aux instants de synchronisation du démodulateur et une valeur nulle au milieu de l'intervalle compris entre les instants de synchronisation consécutifs.

3. Procédé selon la revendication 2, caractérisé en ce que la loi de variation du coût de codage entre une valeur nulle et une valeur maximum est linéaire.

4. Procédé selon la revendication 2, caractérisé en ce que la loi de variation du coût de codage entre une valeur nulle et une valeur maximum est représentée par une fonction polygoniale.

5. Démodulateur de signaux numériques d'amplitude d'enveloppe constante et modulés en phase et/ou en fréquence de façon continue, les signaux numériques étant composés par des suites de symboles de même durée T et juxtaposés les uns aux autres dans le temps, les symboles étant transmis au moyen de sauts de phase et/ou de fréquence pour la mise en oeuvre du procédé selon l'une quelconque des revendications 1 à 4, caractérisé en ce qu'il comprend : un étage de mise en forme (7) pour détecter la phase du signal modulé sous la forme d'un signal d'amplitude variable fonction des variations de phase du signal modulant et échantillonner le signal d'amplitude variable obtenu suivant la période d'échantillonnage T/N, un bloc de calcul (1) de l'angle de phase différentielle $d\phi$ séparant chaque échantillon de phase d'un symbole courant détecté de l'échantillon de même rang situé dans le symbole détecté au temps symbole précédent, un bloc de mémorisation (3, 15) pour mémoriser pendant une durée de L symboles chaque échantillon de phase différentielle dφ, un dispositif de codage (2)1 pour coder chaque angle de phase différentielle fourni par le bloc de calcul, et l'angle de phase différentielle de même rang mémorisé dans le bloc de mémorisation (3, 15) calculé L symboles plutôt, en leur attribuant un coût de codage dépendant de leur amplitude, un circuit additionneur-accumulateur (22, 23) pour soustraire entre eux les coûts calculés par le dispositif de codage et séparés dans le temps de la durée de L symboles, et ajouter au résultat de la soustraction pendant la durée de L symboles, les coûts de codage obtenus pour les échantillons de même rang à l'intérieur de chaque symbole, un circuit de comparaison (24, 25) pour identifier, parmi les N sommes obtenues celle qui donne le résultat le plus grand, un registre tampon (27) pour mémoriser le rang occupé dans chaque symbole par l'échantillon qui a contribué à l'obtention du résultat le plus grand, une logique de commande (28) pour sélectionner l'horloge de synchronisation dont l'impulsion dans le peigne de raie possède le même rang que le rang de l'échantillon mémorisé et un décodeur (5) pour décoder l'angle de phase différentielle qui possède le même rang que l'échantillon mémorisé dans le registre tampon (27).

6. Démodulateur selon la revendication 5, caractérisé en ce que le circuit de codage (21) comprend une mémoire morte programmable pour mémoriser sous la forme de tables les différents coûts à attribuer à chaque angle de phase différentielle calculé par le bloc de calcul.

7. Démodulateur selon la revendication 6, caractérisé en ce qu'il comprend un compteur de dérive (29) pour estimer la dérive de la fréquence de l'onde porteuse, pour adresser les tables de coût en fonction de la dérive estimée.

8. Démodulateur selon la revendication 6, caractérisé en ce que le compteur de dérive (29) transmet la valeur de la dérive estimée au décodeur (5) au travers du registre tampon (27) et de la logique de commande (28) pour effectuer une translation égale à la valeur de la dérive de la phase différentielle des symboles à décoder.

9. Démodulateur selon la revendication 8, caractérisé en ce que le circuit-additionneur-accumulateur (22, 23) permet l'exécution de N x $n_d$ sommes, $n_d$ étant égal au nombre discret de dérive fourni par le compteur de dérive (29).

## Claims

1. Method of demodulating digital signals of constant envelope amplitude modulated in phase and/or in frequency in a continuous manner, the digital signals being composed of strings of symbols of like duration T juxtaposed with one another in time, the symbols being transmitted by means of phase and/or frequency jumps, characterised in that it consists in:
   - detecting (1) the phase of the signal modulated in the form of a signal of variable amplitude dependent on the phase variations of the modulating signal;
   - sampling (7), according to a sampling period equal to T/N, the phase of the detected modulated signal, within each symbol duration T by means of a sampling pulse comb obtained from N clock pulses regularly spaced by a time interval equal to T/N;
   - calculating (1 ;8-14) the differential phase angle dφ separating each phase sample of a detected current symbol, from the sample of like rank situated in the symbol detected at the preceding symbol time;
   - coding (21) each differential phase angle dφ while allocating it a coding cost depending on its amplitude;
   - calculating (22, 23) the sums of the coding costs for the samples of like rank belonging to a specified number L of consecutive symbols;
   - identifying (24, 25), among the N sums obtained, the one which gives the largest result while memorising the rank occupied in each symbol by the corresponding samples;
   - taking (26) as symbol synchronising clock, in order to define the demodulator synchronizing instants, the clock which in the pulse comb possesses the same rank as the rank of the memorised sample;
   - and decoding (5) the differential phase angle which possesses the same rank as the memorised sample.

2. Method according to Claim 1, characterised in that the coding cost has a maximum value when the calculated differential phase angle corresponds to the demodulator synchronizing instants and a zero value in the middle of the interval included between the consecutive synchronising instants.

**3.** Method according to Claim 2, characterised in that the law of variation of the coding cost between a zero value and a maximum value is linear.

**4.** Method according to Claim 2, characterised in that the law of variation of the coding cost between a zero value and a maximum value is represented by a polygonal function.

**5.** Demodulator of digital signals of constant envelope amplitude modulated in phase and/or in frequency in a continuous manner, the digital signals being composed of strings of symbols of like duration T juxtaposed with one another in time, the symbols being transmitted by means of phase and/or frequency jumps, for the implementation of the method according to any one of Claims 1 to 4, characterised in that it comprises: a shaping stage (7) for detecting the phase of the signal modulated in the form of a variable amplitude signal dependent on the phase variations of the modulating signal and sampling the variable amplitude signal obtained in accordance with the sampling period T/N, a block (1) for calculating the differential phase angle $d\phi$ separating each phase sample of a detected current symbol from the sample of like rank situated in the symbol detected at the preceding symbol time, a memory block (3, 15) for memorising, for a duration of L symbols, each differential phase sample $d\phi$, a coding device (2)1 for coding each differential phase angle delivered by the calculating block, and the differential phase angle of like rank memorised in the memory block (3, 15) calculated L symbols sooner, while allocating them a coding cost depending on their amplitude, an adder-accumulator circuit (22, 23) for subtracting amongst them the costs calculated by the coding device and separated in time by the duration of L symbols, and appending to the result of the subtraction for the duration of L symbols the coding costs obtained for the samples of like rank within each symbol, a comparison circuit (24, 25) for identifying, among the N sums obtained, the one which gives the largest result, a buffer register (27) for memorising the rank occupied in each symbol by the sample which contributed to obtaining the largest result, a control logic (28) for selecting the synchronising clock whose pulse in the spectral line comb possesses the same rank as the rank of the memorised sample and a decoder (5) for decoding the differential phase angle which possesses the same rank as the sample memorised in the buffer register (27).

**6.** Demodulator according to Claim 5, characterised in that the coding circuit (21) comprises a programmable read-only memory for memorising in the form of tables the various costs to be allocated to each differential phase angle calculated by the calculating block.

**7.** Demodulator according to Claim 6, characterised in that it comprises a drift meter (29) for estimating the drift in the frequency of the carrier wave, in order to address the cost tables as a function of the estimated drift.

**8.** Demodulator according to Claim 6, characterised in that the drift meter (29) transmits the value of the estimated drift to the decoder (5) through the buffer register (27) and through the control logic (28) in order to perform a translation equal to the value of the drift in the differential phase of the symbols to be decoded.

**9.** Demodulator according to Claim 8, characterised in that the adder-accumulator circuit (22, 23) allows the execution of $N \times n_d$ sums, $n_d$ being equal to the discrete drift number delivered by the drift meter (29).

**Patentansprüche**

**1.** Verfahren zur Demodulation von kontinuierlich phasen- und/oder frequenzmodulierten digitalen Signalen konstanter Hüllamplitude, die aus Folgen von Zeichen zusammengesetzt sind, die zeitlich von gleicher Dauer T sind und nebeneinanderliegen, wobei die Zeichen mittels Phasen- und/oder Frequenzsprüngen übertragen werden, dadurch gekennzeichnet, daß es auf folgendem beruht:
  - Erfassen (1) der Phase des modulierten Signals in Form eines Signals variabler Amplitude, die von den Phasenänderungen des Modulationssignals abhängt;
  - Abtasten (7) der Phase des erfaßten modulierten Signals gemäß einer Abtastperiode gleich T/N innerhalb einer jeweiligen Zeichendauer T mittels eines Abtastimpulskammes, der ausgehend von N Taktimpulsen erhalten wurde, die gleichmäßig durch ein Zeitintervall gleich T/N voneinander beabstandet sind;
  - Berechnen (1; 8-14) des differentiellen Phasenwinkels $d\Phi$, der einen jeweiligen Phasenabtastwert eines erfaßten laufenden Zeichens von dem Abtastwert einer gleichen, innerhalb des Zeichens gelegenen Stelle trennt, der zur Zeit des vorhergehenden Zeichens erfaßt wurde;

- Codieren (21) eines jeweiligen differentiellen Phasenwinkels dΦ, indem ihm ein von seiner Amplitude abhängiger Codierungsbetrag zugeordnet wird;
- Berechnen (22, 23) der Summen der Codierungsbeträge für die Abtastwerte einer gleichen Stelle, die einer festgelegten Anzahl L von aufeinanderfolgenden Zeichen angehören;
- Bestimmen (24, 25) derjenigen unter den N erhaltenen Summen, die das größte Ergebnis liefert, indem die Stelle gespeichert wird, die in dem jeweiligen Zeichen von den entsprechenden Abtastwerten eingenommen wird;
- Hernehmen (26) des Taktes als Zeichensynchronisierungstakt zur Festlegung der Synchronisierungszeitpunkte des Demodulators, der in dem Impulskamm dieselbe Stelle einnimmt wie der gespeicherte Abtastwert;
- und Decodieren (5) des differentiellen Phasenwinkels, dem die gleiche Stelle wie dem gespeicherten Abtastwert zukommt.

2. Verfahren nach Anspruch 1, dadurch gekennzeichnet, daß der Codierungsbetrag einen maximalen Wert erhält, wenn der berechnete differentielle Phasenwinkel den Synchronisierungszeitpunkten des Demodulators entspricht, und einen Wert Null in der Mitte des zwischen den aufeinanderfolgenden Synchronisierungszeitpunkten gelegenen Intervalls.

3. Verfahren nach Anspruch 2, dadurch gekennzeichnet, daß der Verlauf einer Änderung des Codierungsbetrages zwischen einem Wert Null und einem maximalen Wert linear ist.

4. Verfahren nach Anspruch 2, dadurch gekennzeichnet, daß der Verlauf einer Änderung des Codierungsbetrages zwischen einem Wert Null und einem maximalen Wert durch eine polygonale Funktion wiedergegeben ist.

5. Demodulator für kontinuierlich phasen- und/oder frequenzmodulierte digitale Signale konstanter Hüllamplitude, wobei die digitalen Signale aus Folgen von Zeichen zusammengesetzt sind, die zeitlich von gleicher Dauer T sind und nebeneinanderliegen, und die Zeichen mittels Phasen- und/oder Frequenzsprüngen übertragen werden, zur Durchführung des Verfahrens nach einem der Ansprüche 1 bis 4, dadurch gekennzeichnet, daß er folgendes enthält: eine Formgebungsstufe (7) zum Erfassen der Phase des modulierten Signals in der Form eines Signals mit einer variablen Amplitude, die von Phasenänderungen des Modulationssignals abhängt, und zum Abtasten des gemäß der Abtastperiode T/N erhaltenen Signals variabler Amplitude, einen Block (1) zur Berechnung des differentiellen Phasenwinkels dΦ, der einen jeweiligen Phasenabtastwert eines erfaßten laufenden Zeichens von dem Abtastwert einer gleichen, innerhalb des Zeichens gelegenen Stelle trennt, der zur Zeit des vorhergehenden Zeichens erfaßt wurde, einen Speicherblock (3, 15) zum Speichern eines jeweiligen differentiellen Phasenabtastwertes dΦ während einer Dauer von L Zeichen, eine Codiervorrichtung (21) zum Codieren eines jeweiligen, von dem Berechnungsblock gelieferten differentiellen Phasenwinkels und des in dem Speicherblock (3, 15) gespeicherten, L Zeichen eher berechneten differentiellen Phasenwinkels der gleichen Stelle, indem ihnen ein Codierungsbetrag zugeordnet wird, der von ihrer Amplitude abhängt, eine Additions-Speicher-Schaltung (22, 23) zum gegenseitigen Subtrahieren der durch die Codiervorrichtung berechneten Beträge, die zeitlich durch die Dauer von L Zeichen getrennt sind, und zum Hinzufügen der für die Abtastwerte gleicher Stelle innerhalb eines jeweiligen Zeichens erhaltenen Codierungsbeträge zu dem Ergebnis der Subtraktion während der Dauer von L Zeichen, eine Vergleichsschaltung (24, 25) zum Bestimmen derjenigen unter den erhaltenen N Summen, die das größte Ergebnis liefert, einen Zwischenspeicher (27) zum Speichern der Stelle, die in einem jeweiligen Zeichen durch den Abtastwert belegt ist, der zum Erhalt des größten Ergebnisses beigetragen hat, eine Steuerlogik (28) zum Auswählen des Synchronisierungstaktes, dessen Impuls in dem Strichkamm dieselbe Stelle wie der gespeicherte Abtastwert einnimmt, und einen Decodierer (5) zum Decodieren des differentiellen Phasenwinkels, der dieselbe Stelle wie der in dem Zwischenspeicher (27) gespeicherte Abtastwert einnimmt.

6. Demodulator nach Anspruch 5, dadurch gekennzeichnet, daß die Codierschaltung (21) einen programmierbaren Festspeicher enthält, um in der Form von Tabellen die unterschiedlichen Beträge zu speichern, die einem jeweiligen differentiellen Phasenwinkel zuzuordnen sind, der von dem Berechnungsblock berechnet wurde.

7. Demodulator nach Anspruch 6, dadurch gekennzeichnet, daß er einen Abweichungszähler (29) enthält, um die Abweichung der Frequenz der Trägerwelle zu schätzen und um die Betragstabellen in Abhängigkeit von der geschätzten Abweichung zu adressieren.

8.  Demodulator nach Anspruch 6, dadurch gekennzeichnet, daß der Abweichungszähler (29) den Wert der geschätzten Abweichung über den Zwischenspeicher (27) und die Steuerlogik (28) zu dem Decodierer (5) überträgt, um eine Translation gleich dem Wert der Abweichung der differentiellen Phase der zu codierenden Zeichen zu bewirken.

9.  Demodulator nach Anspruch 8, dadurch gekennzeichnet, daß die Additions-Speicher-Schaltung (22, 23) die Ausführung von $N \times n_d$ Summen ermöglicht, wobei $n_d$ gleich der diskreten Abweichungszahl ist, die von dem Abweichungszähler (29) geliefert wird.

FIG.1

FIG.2

FIG.3

FIG.4

FIG.5

FIG.6

FIG.7

FIG.8

FIG.9

# FIG.10

# FIG.11

# FIG.12

# FIG.13